Europäisches Patentamt

European Patent Office

Office européen des brevets

(11) Publication number: **0 320 073 B1**

(12) **EUROPEAN PATENT SPECIFICATION**

(45) Date of publication of patent specification: **18.05.94** (51) Int. Cl.⁵: **G01V 1/02**

(21) Application number: **88202806.1**

(22) Date of filing: **07.12.88**

---

(54) **Air gun array.**

---

(30) Priority: **10.12.87 US 131154**

(43) Date of publication of application:
**14.06.89 Bulletin 89/24**

(45) Publication of the grant of the patent:
**18.05.94 Bulletin 94/20**

(84) Designated Contracting States:
**DE FR GB NL**

(56) References cited:
**EP-A- 0 031 196**
**FR-A- 2 535 469**
**GB-A- 2 092 750**
**US-A- 3 893 539**

**GEOPHYSICAL PROSPECTING, vol. 26, 1978, pages 194-201, The Hague, NL; J.J. NOOTEBOOM: "Signature and amplitude of linear airgun arrays"**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Rosenbladt, Robert Ludwig**
**7708 Park Vista Drive**
**Houston Texas 77072(US)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

# EP 0 320 073 B1

**Description**

This invention relates to seismic exploration, and more particularly, relates to marine seismic sources.

In marine seismic exploration an air gun system is normally used as a seismic source in conjunction with a streamer towed behind a seismic exploration vessel. The streamer cable normally contains compressional detectors. Each air gun suddenly releases high pressure air, which generates compressional energy that is radiated in all directions, with some energy directed towards the sea floor and some towards the sea surface. The detectors being towed behind the seismic exploration vessel may detect this radiated energy when it is reflected from formation interfaces below the sea floor. In addition to the reflected energy, the detectors will also detect acoustical noise and direct arrivals from the air gun source, which are not reflected off formations beneath the seafloor but have radiated directly to the detectors, or have been reflected from the sea surface, or sea bottom.

It is conventional to employ multiple air gun sources in such a system to attempt to maximize the total radiated energy as measured by the peak pressure amplitude of the signature underneath the array of air guns, i.e. the energy directed towards the ocean bottom. It is desired to have a tuned air gun array which will operate as a broad-band high energy source. This is critical when one considers dynamic range specifications of the complete seismic system, where the source (exclusive of the shot-generated noise) is one piece of the total seismic system. The dynamic range of the system can be increased for all non-source generated noise, (i.e., transmission losses and environmental noise) by simply increasing the source size. For guns of one size, the maximum radiated energy of an air gun system is achieved by using equal volume air guns at the highest acceptable operating pressure. The minimum volume used is determined by an acceptable pulse spectrum. However, when using equal volume air guns, a major component of the radiated signal is caused by bubble oscillations, with the consequence that the composite frequency spectra has peaks and notches. Although these oscillations are often objectionable in both structural and detail mapping, they may be acceptably suppressed by spiking deconvolution and in theory are completely removed by signature deconvolution. The deconvolution procedure is very effective in a very noise-free system. However, this good deconvolution performance can not be expected on a seismic trace acquired in a "noisy" marine environment where the noise is larger than the signal in a "notch" of the array spectra.

Many prior art algorithms or techniques have been proposed to systematize the design of air gun arrays so as to enhance their signature and power. For example, U.S.-A-4,382,486 teaches a method for determining the spacing and volume of air guns in a tuned air gun array. In particular, this reference teaches determining volume ratios (that are calculated based upon a predetermined maximum volume ratio) for any individual gun, with these guns spaced for optimum air gun interaction. This reference teaches a particular equation which establishes these volume ratios and determines different gun volumes having bubble periods distributed over a range of times, i.e. $T_{min}$ (minimum bubble period) to $T_{max}$ (maximum bubble period), but with closer spacing between bubble periods near $T_{min}$. This equation includes two parameters which may be varied to provide different array volume ratios; however, this reference is not clear in its teachings of how to optimize these two parameters.

In essence, U.S. Patent Specification No. 4,382,486 teaches selecting the smallest air gun volume, and correspondingly the smallest bubble period (which then determines the highest frequency of his array) and then multiplies this smallest bubble period (highest frequency) by two to obtain an approximation of the bubble period (frequency) for the largest gun. However, twice the bubble period of the smallest gun then has a ghost period subtracted from it to actually determine the bubble period of the largest gun. Alternatively, this is equivalent to selecting the largest gun volume, increasing the bubble period of the largest gun by a ghost period and then halving the result to determine the smallest bubble period, from which the smallest gun volume may be determined. The proper selection of the ghost period to be employed to make these determinations is also unclear, since US 4,382,486, in its examples, uses a ghost period that is different from that expected from the depth of its guns. Then knowing the remaining number of guns to be employed in the array, these remaining guns are distributed between the largest and the smallest gun to infill the range between the largest and smallest gun, based upon the volume ratio equation of the said reference which deals with bubble periods, i.e. time; gun volumes are also selected so that bubble periods are closer together near the $T_{min}$ boundary.

However, US 4,382,486 in its broadest claim, starts by selecting the largest air gun volume (without reference to the smallest air gun, a ghost period, or bubble period) followed by selecting the number of air guns to be contained in his array. US 4,382,486 then determines the gun volume ratios for the individual guns based upon the equation, which uses the largest to smallest gun volume ratio ($V_{Ro}$). A dependent claim adds the determination of the largest air gun volume from the volume of the smallest air gun, the bubble period of the smallest air gun, and a ghost period.

2

An additional prior art reference that deals with the calculation of volumes and spacing between guns and an air gun array is found in the paper "Signature and Amplitude of Linear Air Gun Arrays", Geophysical Prospecting, 26 (1978), pp. 194-201, Nooteboom, J. J. This known method also deals with time, or bubble period, and is similar to that discussed above for the said US 4,382,486. However, Nooteboom does not subtract off a ghost period from twice the smallest bubble period to determine the largest gun volume. Although discussed in the terminology of "bubble period", Nooteboom in effect selects his remaining guns to be equally spaced in frequency between the lowest frequency (largest gun) and the highest frequency (smallest gun).

More particularly, although Nooteboom teaches the use of bubble periods to calculate air gun volumes, it also suggests the use of a one octave range of frequencies for less than eight guns in an array, and more than one octave range of frequencies for more than eight guns in an array. Nooteboom proposes a $T_{max} < 2T_{min}$ and a bubble period spacing between guns, $\Delta T$, of $cT^2$. However, a bubble period spacing of $\Delta T = cT^2$, results in a constant frequency spacing between guns. This constant spacing results in a composite frequency spectrum that still has significant peaks and notches. Nooteboom employs an iterative type equation to solve for gun bubble periods once one gun bubble period is known. Further, Nooteboom states that the amplitude of a gun is proportional to its volume.

These and other limitations and disadvantages of the prior art are overcome by the present invention, however, and improved methods are provided for determining the size of guns for a seismic gun array after the maximum gun size and the number of guns in the array have been selected.

In an advantageous embodiment of the present invention, methods are provided for determining marine seismic source arrays which operate as broad-band high energy sources. The method of the present invention selects a maximum gun size which then determines the minimum or lowest frequency of the array. Alternatively, the lowest frequency may be selected which then determines the largest gun size for a selected operating pressure and depth. The number of guns remaining in the array is then selected. The remaining number of guns is then used to fill in the first octave from the minimum frequency in a manner to provide a composite amplitude that is as flat as possible over the first octave. In particular, the method of the present invention utilizes the fact that the amplitude of an individual gun measured far from the gun is inversely proportional to the frequency of the gun. Thus, the methods of the present invention adjust the frequency difference between the high frequency guns to compensate for their decrease in amplitude.

It is an object of the present invention to provide a method for determining marine seismic source arrays which operate as broad-band high energy sources.

It is another object of the present invention to provide broad-band high energy sources having a relatively flat composite frequency spectrum for marine seismic exploration.

The invention will now be described in more detail by way of example by reference to the accompanying drawings, in which:

Fig. 1 depicts a typical time signature and spectrum of a single air gun;

Fig. 2 depicts the measurement of relative amplitude for several different air guns having different volumes and with the measurement made far from the air gun;

Fig. 3 depicts the measured time signature and frequency spectrum in the frequency band of 0-128 Hz for an array having gun sizes determined by the method of the present invention at a preselected depth and operating pressure;

Fig. 4 depicts the measured time signature and frequency spectrum in the frequency band of 0-128 Hz for the array of Fig. 3 at a different depth;

Fig. 5 depicts the measured time signature and frequency spectrum in the frequency band of 0-128 Hz for the array of Fig. 3 at a different depth;

Fig. 6 depicts the measured spectra of the array of Fig. 3 from 3-128 Hz compared with an array having gun sizes determined by conventional methods in a log frequency plot;

Fig. 7 depicts the simulated time signature and frequency spectrum in the frequency band of 0-128 Hz for an array determined by the method of the present invention;

Fig. 8 depicts the simulated time signature and frequency spectrum in the frequency band of 0-128 Hz for an array determined by Nooteboom's method;

Fig. 9 depicts the simulated time signature and frequency spectrum in the frequency band of 0-128 Hz for an array determined by the method of US 4,382,486; and

Fig. 10 depicts the data of Figs. 7-9 in a 3-128 Hz log frequency plot.

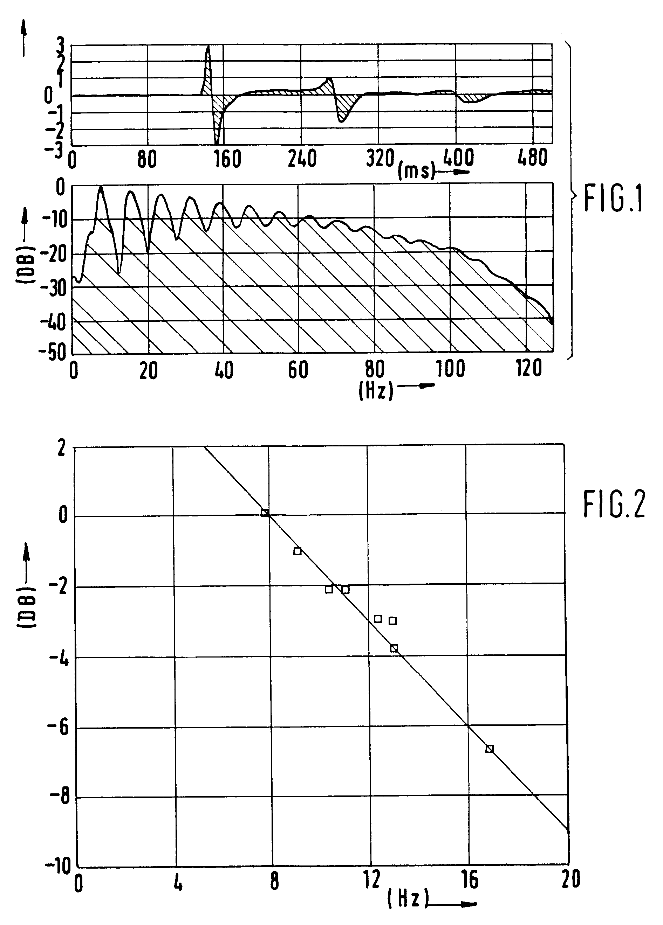

Referring now to the figures, air guns have become a standard marine seismic source due to their reliability and their relatively high output of radiated acoustic energy. In the marine seismic technique the volume of air guns is generally expressed in cubic inches. A single air gun, however, produces a very long time signature caused by successive expansion and contractions of the bubble of air released into the water. The spectrum of the single air gun results in a peak at a frequency given by the inverse of the bubble period and at harmonics of that frequency. Fig. 1 depicts a typical time signature and frequency spectrum for a single air gun. The upper horizontal axis represents time (in milliseconds), whereas the lower horizontal axis represents frequency (in Hz). The upper vertical axis represents amplitude, whereas the lower vertical axis represents power (in dB). This signature and spectrum are for a 461 cubic inch (7,555 cm$^3$ ) air gun at 6 metres and operating at an operating pressure of 2000 psia (137 bar). It may be seen that deep notches occur in the spectrum between the peaks.

In order to make air guns more attractive as seismic sources, arrays of guns with different bubble periods are generally used. Although conventional arrays of air guns normally employ different volumes having the same operating pressure and depth, changing the volume, or the operating pressure, or depth, or any combination of these three operating parameters for the air guns in an array will effect a change in bubble period for the air guns in the array. Varying the bubble periods of the air guns (conventionally by varying volumes of the air guns) within the array permits cancellation to occur between the energy or signals caused by the bubbles of the different guns to produce a resulting composite signal wavelet, which measured far from the array, decays more rapidly in time and has a flatter spectrum than a single air gun.

Air gun arrays for marine seismic exploration have significant problems with bubble period noise. Often this bubble period noise will create spurious events that tend to mask true reflection events. The primary source of this acoustic noise is bubble oscillation and adjacent bubble interactions. However, this noise and these interactions may be removed by "tuning" the air gun array. Tuning an air gun array involves combining different volume air guns into an array having reduced bubble oscillations but spaced apart such that an individual air gun's bubble has no, or a small, physical interaction with the bubbles of the other air guns.

Array tuning may be accomplished by altering the volumes, depths, pressures, or any combination of these operating parameters of the air guns due to the physical properties of the oscillating bubbles of gas discharged by the air guns. The bubble oscillation period is related to gun chamber pressure, gun chamber volume and hydrostatic pressure (depth) as follows:

$$T = (c) \frac{(P \ V)^{1/3}}{(D + 33)^{5/6}} = 1/F \qquad (1)$$

where, T is equal to the bubble oscillation period in seconds, c is a constant, F is equal to the frequency, P is equal to the gun chamber pressure (i.e. operating pressure in bar), V is equal to the gun chamber volume (in$^3$), and D is equal to depth of the gun below the water surface, in feet.

According to the methods of the present invention, for a given operating pressure, the selection of the volume and depth of the largest air gun of an air gun array specifies the lowest frequency of the array. That is, the peak frequency of the largest air gun is effectively the lowest frequency of the air gun array. In general, however lower frequencies, in the range of 5-15 Hz, for air gun arrays are required for better depth penetration. The method then selects the frequency of the remaining air guns of the array to fill in a preselected frequency range, which is advantageously the first octave above this lowest frequency. The frequencies of the remaining air guns are picked so that their dominant frequencies are distributed across the preselected frequency range in a manner to smooth or flatten the resulting composite spectrum of all the air guns. Advantageously, the methods of the present invention are used to select the volumes of air guns for use in a marine seismic array.

The methods of the present invention may also be used to determine the sizes of any type of explosive or impulsive source suitable for use in a marine seismic array, once the amplitude versus frequency response of the individual sources are known. After the amplitude versus frequency response is known it is then possible to pick the frequencies of the source to provide a smooth or flat resulting composite spectrum for all the sources in the array. Further, once the frequencies are known, it is possible to then determine the appropriate operating parameters, such as depth or size, for the sources from an equation similar to equation 1 but appropriate for the source used in the array.

It has been observed that the amplitude of the peak frequency for different air guns measured far from the air gun is approximately inversely proportional to frequency, as depicted in Fig. 2. The horizontal axis represents peak frequence (in Hz), whereas the vertical axis represents peak amplitude (in dB). Fig. 2 depicts small squares which represent the far field measurement of amplitude versus frequency for single air guns at 6 metres and 2000 psia (137 bar) operating pressure. The solid line in Figure 2 represents a 1/F line. Therefore, it is more difficult for the smaller volume air guns to adequately fill in and smooth the notches of the more powerful, larger volume air guns. To correct for this effect, the method of the present invention distributes the available number of small volume air guns more densely in frequency space than the large volume air guns. In this manner, the method of the present invention smooths the notches of the large volume air guns with the signals from the smaller volume air guns to provide a flatter composite spectrum for the total array.

More particularly, the method of the present invention for an air gun array requires as a starting point the frequency of the largest gun, $F_1$ and the number of guns in the array N. The preferred method then uses the first octave above $F_1$ as the preselected frequency range. The frequencies of the remaining guns may then be determined from the following set of equations;

$$F_{i+1} = F_i + \Delta_i + \Delta_{i+1} \qquad (2)$$

$$\Delta_{i+1} = \Delta_i(F_i/F_{i+1}) \qquad (3)$$

for i = 1 to N-1, subject to the constraint

$$2F_1 = F_N + \Delta_N. \qquad (4)$$

The constraint equation may be appropriately modified to reflect the preselected frequency range, when a frequency range other than the preferred one octave is employed.

These equations may be solved iteratively from the low end frequency by using an initial guess for $\Delta_1$ to start the iteration. For example, $\Delta_1$ may be selected to be 1 Hz. Once the frequencies are known, the volumes can be found using equation 1 which relates the bubble period, T, and frequency, F, to the air gun operating parameters (pressure, volume, depth, or combinations thereof).

As an example, to illustrate the solution of these equations, assume that the frequency of the largest gun is 8 Hz and it is desired to have 8 guns in an array. For this example, the initial assumption of $\Delta_1$ is 1 Hz ($\Delta_1$ may be assumed to be any value) and the following equations would result for the frequency, $F_2$, of the next gun in the array,

$$F_2 = 8 + 1 + \Delta_2 \qquad (5a)$$

and

$$\Delta_2 = \Delta_1 (8/F_2) \qquad (5b)$$

These equations may be combined, manipulated and rearranged to provide the following equation:

$$F_2{}^2 - 9F_2 - 8 = 0 \qquad (6)$$

This equation may then be solved for $F_2$ and the values so obtained may then be compared to the frequency, $F_1$, to determine a frequency value that makes realistic sense (i.e. a frequency greater than $F_1$); this value of $F_2$ is then employed to generate $\Delta_2$ from equation 5b. Next an analogous set of equations for $F_3$ is generated and solved for $F_3$. Similarly, once $F_3$ is determined a $\Delta_3$ must be determined. $F_3$ and $\Delta_3$ may then be employed to generate equations for $F_4$ which may be solved for $F_4$ and then $\Delta_4$. The equations of the remaining guns in the array are similarly generated and solved for their frequencies in a stepwise manner.

Once $F_8$ and $\Delta_8$ have been calculated the last equation (equation 4) is used to determine whether or not two times the frequency of the largest gun is in fact equal to $F_8 + \Delta_8$, i.e. whether the first octave is properly filled. If these two sides of the equation are not equal, then the initial value of $\Delta_1$ is varied slightly and the iterative process described hereinabove is repeated to calculate the set of frequencies and Δ's to adjust this inequality until the two sides of the equation are equal, within a desired preselected limit, such as, for example 0.01. For example, if twice the frequency of the largest air gun is larger than $F_8 + \Delta_8$, then $\Delta_1$ should be increased. Similarly, if twice the frequency of the largest air gun is less the $F_8 + \Delta_8$, then $\Delta_1$ should be decreased. The amount of adjustment to $\Delta_1$ depends upon the amount of difference between twice the frequency of the largest air gun and $F_8 + \Delta_8$. The smaller (or larger) the difference, the smaller (or larger) the adjustment to $\Delta_1$.

To compare the improvement in composite signal which is possible using the method of the present invention several subarrays have been simulated. The simulation technique employed herein models individual air gun bubbles modified to take into account the effects of interaction between the bubbles of the guns. Arrays with comparable total volumes were simulated for comparison. In all simulation cases the air guns were assumed to be operating at an operating pressure of 137 bar. Further, the spacing between guns was calculated to make use of a 18 metres length while maintaining a uniform spacing factor between each pair of guns. The spacing factor is defined as the physical air gun distance of separation divided by the sum of the maximum radii of the two air bubbles; this spacing factor is normally 2 to $2\frac{1}{2}$. The subarrays are summarized in Table 1, for two depth simulations.

One subarray which was modeled had a total volume of 1512 cubic inches (24,777 $cm^3$). This 1512 cubic inch array is based upon an air gun array actually employed to acquire seismic data, and was selected as an array to model since it is capable of having actual measurements of its signals made. The volumes for the 1512 cubic inch array were selected on the basis of a conventional method (modified Nooteboom method) for a seven gun array. However, the actual volumes for the guns selected in this design were those which made use of existing chamber sizes, for convenience. This caused some small scatter from the frequency specified by a conventional method for selecting air gun sizes for an array. Further, an eighth air gun was added to smooth a notch in the composite frequency spectrum of the seven gun array.

Two subarrays were modeled which were determined by the methods of the present invention. One, of 1517 total cubic inches (24,859 $cm^3$), used ideal volumes specified by method of the present invention, while the second, of 1545 cubic inches (25,307 $cm^3$), utilized mostly existing chamber sizes to minimize the expense of implementing and testing the design. Again this caused some small scatter between the frequency determined by the method of the present invention and the frequency employed in an actual array. All of these arrays have been modelled to have the largest gun at one end of the float and the smallest gun at the opposite end of the float (under which the air guns are deployed) and the remaining guns are spaced therebetween and ranked in accordance with size.

EP 0 320 073 B1

## TABLE 1

1512 Cubic Inch (24,777 cm$^3$) Array Based on Conventional Method

| Air Gun Volume (in$^3$) calculated/actual | ----6 metres----- | | -----9 metres----- | |
|---|---|---|---|---|
| | $T_B$ (ms) | Frequency (Hz) | $T_B$ (ms) | Frequency (Hz) |
| 475/461 | 127.4 | 7.85 | 110.3 | 9.06 |
| 319/328 | 113.8 | 8.79 | 98.5 | 10.15 |
| 224/216 | 99.0 | 10.10 | 85.7 | 11.67 |
| 163/163 | 90.1 | 11.10 | 78.0 | 12.82 |
| 123/123 | 82.0 | 12.19 | 71.0 | 14.08 |
| 94/101 | 76.8 | 13.02 | 66.5 | 15.03 |
| 74/ 80 | 71.1 | 14.07 | 61.5 | 16.25 |
| 0*/ 40* | 56.4 | 17.73 | 48.8 | 20.47 |

(*This air gun was added to smooth a notch in a seven gun array)

1517 Cubic Inch (24,859 $cm^3$) Array Based on Present Invention

| Air Gun Volume ($in^3$) calculated/actual | -----6 metres----- | | -----9 metres----- | |
|---|---|---|---|---|
| | $T_B$ (ms) | Frequency (Hz) | $T_B$ (ms) | Frequency (Hz) |
| 498/498 | 130.7 | 7.65 | 113.2 | 8.38 |
| 300/300 | 110.4 | 9.06 | 95.6 | 10.46 |
| 206/206 | 97.4 | 10.27 | 84.4 | 11.85 |
| 152/152 | 88.1 | 11.35 | 76.2 | 13.12 |
| 119/119 | 81.0 | 12.34 | 70.3 | 14.23 |
| 96/ 96 | 75.5 | 13.25 | 65.4 | 15.29 |
| 79/ 79 | 70.9 | 14.11 | 61.3 | 16.32 |
| 67/ 67 | 67.1 | 14.93 | 58.0 | 17.24 |

EP 0 320 073 B1

1545 Cubic Inch (25,307 cm$^3$) Array Based on Present Invention

| Air Gun Volume (in$^3$) | -----6 metres----- | | -----9 metres----- | |
|---|---|---|---|---|
| calculated/actual | $T_B$ (ms) | Frequency (Hz) | $T_B$ (ms) | Frequency (Hz) |
| 498/498 | 130.7 | 7.65 | 113.2 | 8.83 |
| 300/300 | 110.4 | 9.06 | 95.6 | 10.46 |
| 206/216 | 99.0 | 10.10 | 85.7 | 11.67 |
| 152/163 | 90.1 | 11.10 | 78.0 | 12.82 |
| 119/123 | 82.0 | 12.19 | 71.0 | 14.08 |
| 96/101 | 76.8 | 13.02 | 66.5 | 15.03 |
| 79/ 80 | 71.1 | 14.07 | 61.5 | 16.25 |
| 67/ 64 | 66.0 | 15.15 | 57.1 | 17.50 |

EP 0 320 073 B1

Figures of merits for each of the simulated arrays in the band 0-128 Hz are summarized below for depths of 6 and 9 metres.

| Total Volume (in³) | (cm³) | Depth (metres) | O-Peak (bar-meters) | Peak-Peak (bar-meters) | Peak/Bubble | Notch Depth (db) |
|---|---|---|---|---|---|---|
| 1512 | (24,777) | 6 | 20.3 | 35.2 | 10.2 | 6.0 |
|  |  | 9 | 20.3 | 38.2 | 8.3 | 6.0 |
| 1517 | (24,859) | 6 | 20.6 | 35.8 | 12.5 | 5.0 |
|  |  | 9 | 20.6 | 38.8 | 9.2 | 5.0 |
| 1545 | (25,307) | 6 | 20.7 | 36.0 | 12.3 | 4.5 |
|  |  | 9 | 20.8 | 39.0 | 9.6 | 4.5 |

The differences between the simulated 1517 and the 1545 cubic subarrays are fairly small. Both have higher peak-to-bubble ratios and shallower notches than the 1512 cubic inch subarray constructed using a conventional array algorithm.

An experiment was performed to measure the far field signal wavelet of the 1545 cubic inch array in the field. Results of the tests are summarized below. For comparison, measured figures of merit for the 1512 cubic inch subarray are included for gun depths of 6 and 9 metres. Both arrays were deployed under a 18 metre float, as noted hereinbefore in the modelling discussion, and the individual air guns were operated at an operating pressure of 2000 psia (137 bar).

| Total Volume (in³) | (cm³) | Depth (metres) | O-Peak (bar-meters) | Peak-Peak (bar-meters) | Peak/Bubble | Notch Depth (db) |
|---|---|---|---|---|---|---|
| 1545 | (25,307) | 6 | 13.8 | 27.2 | 9.8 | 5 |
|  |  | 7.5 | 14.8 | 28.7 | 8.1 | 6 |
|  |  | 9 | 14.7 | 29.5 | 6.5 | 5 |
| 1512 | (24,777) | 6 | 13.7 | 28.7 | 10.3 | 9 |
|  |  | 9 | 14.0 | 25.2 | 5.7 | 10 |

11

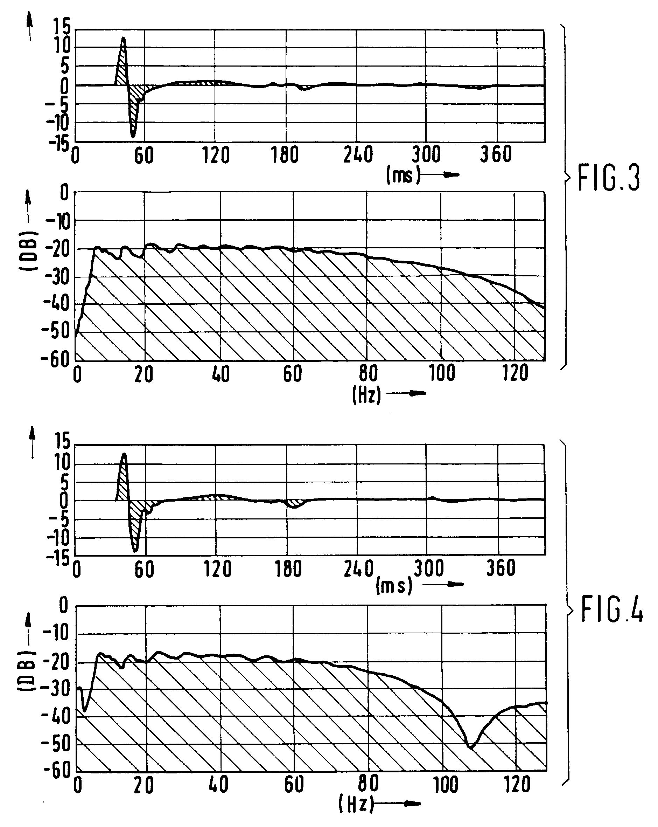

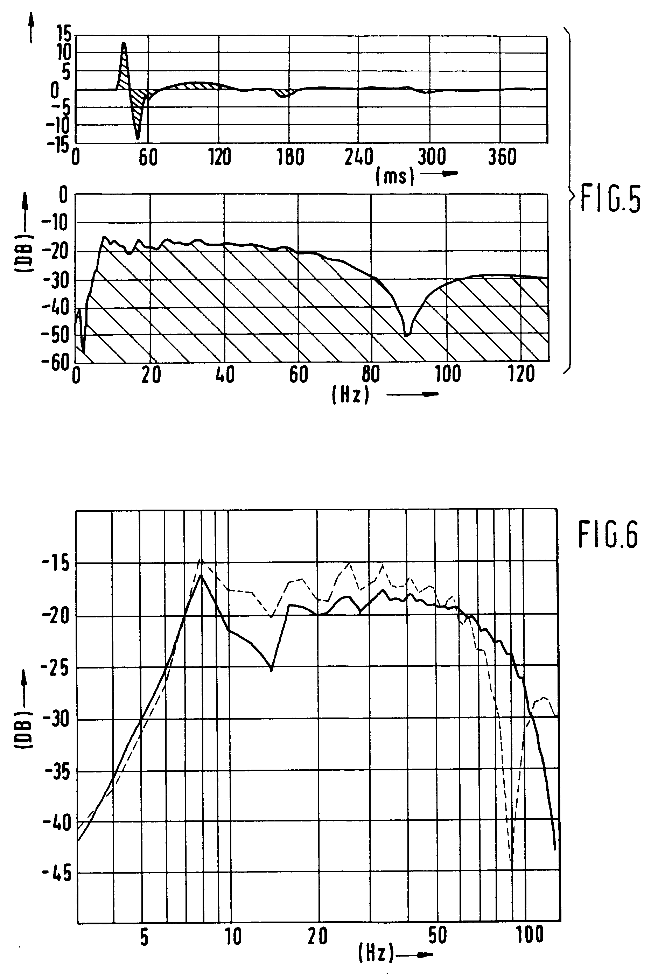

Figs. 3-5 show the time signature and frequency spectrum (0-128 Hz) for the 1545 cubic inch array at each of the three measured depths 6, 7,5 and 9 metres, respectively. The upper horizontal axes represent time (in milliseconds) whereas the lower horizontal axes represent frequency (in Hz). The upper vertical axes represent amplitude, whereas the lower vertical axes represent power (in dB). The 1545 cubic inch array is robust enough to be used at any depth between 6 and 9 metres while still maintaining its desirable spectral characteristics. Fig. 6 compares the spectra of the 1512 cubic inch array at 6 metres (solid line) with the spectra of the 1545 cubic inch array at 9 metres (dashed line). Fig. 6 is a log frequency plot of these two spectra for frequencies between 3 to 128 Hz. The horizontal axis represents frequency (in Hz) whereas the vertical axis represents power (in dB). In addition to having a flatter or smoother spectrum, the 1545 cubic inch array has more amplitude at all frequencies between 7 and 58 Hz. Also, because the guns would be towed 50% further from the floats from which they are suspended than the 1512 cubic inch subarray, the pressure pulses experienced by the floats from the expanding bubbles would be significantly reduced with the new array at the deeper depth.

An array resulting from the method of the present invention was compared to an array resulting from Nooteboom's method and the method of US 4,382,486. The total volume and number of guns of all three arrays were kept constant at 1517 cubic inches and 8 guns. The output of each array was simulated as noted hereinbefore.

The volumes (in cubic inches) of the air guns for the three arrays are listed below:

| US 4,382,486 ARRAY | NOOTEBOOM'S ARRAY | PRESENT INVENTION ARRAY |
|---|---|---|
| 454 | 438 | 498 |
| 310 | 307 | 300 |
| 218 | 224 | 206 |
| 161 | 168 | 152 |
| 122 | 130 | 119 |
| 97 | 102 | 96 |
| 81 | 82 | 79 |
| 74 | 66 | 67 |

The simulation was again performed with the guns in a line ascending from the smallest volume to the largest volume. The distance from the smallest to largest gun in each array was 19 metres. The distances between adjacent guns was selected to achieve a constant spacing factor for each array. The spacing factors were 2.15 for the array determined by the methods of the present invention, 2.12 for the array determined by the method of Nooteboom and 2.13 for the array determined by the method of US 4,382,486. The output of the array was simulated at 33 metres below the center of the array. All three arrays were simulated at a depth of 6 metres and an operating pressure of 2000 psia (137 bar).

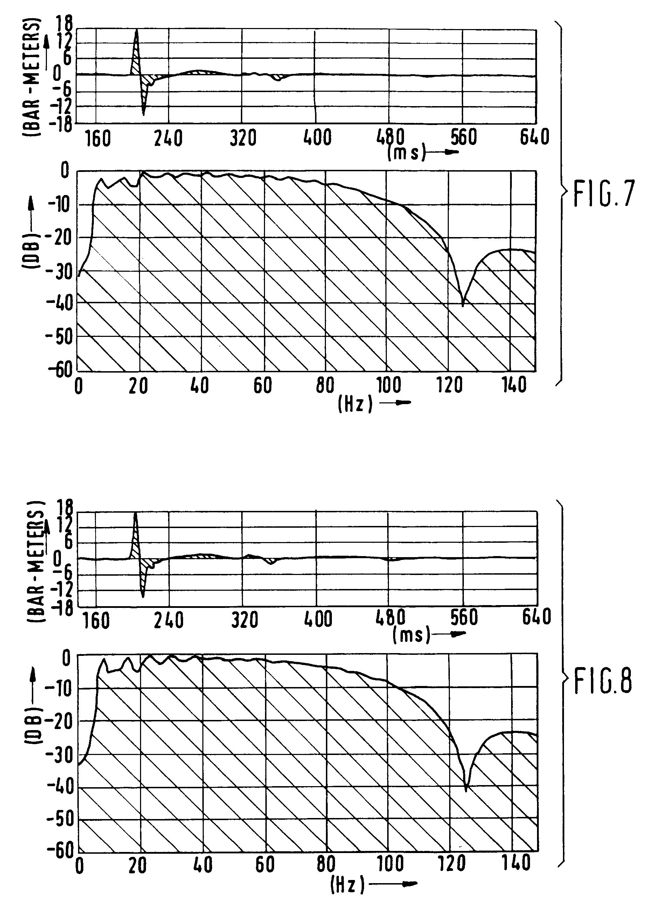

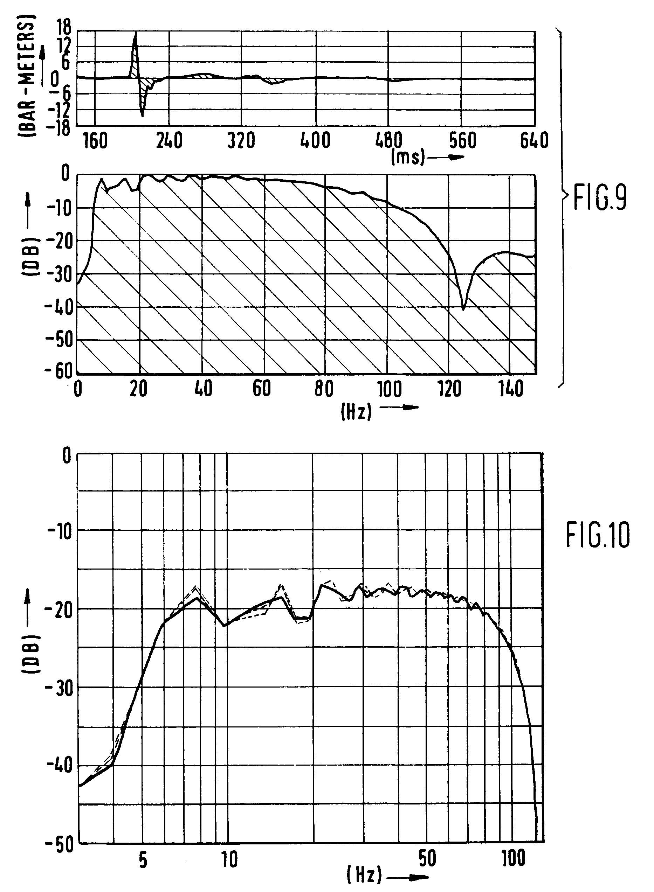

Figs. 7-9 show the time signature and frequency spectrum (0-128 Hz) for these three arrays. The upper horizontal axis of each figure represent time (in milliseconds) wheras the lower horizontal axes represent frequency (in Hz). The upper vertical axes of each figure represent amplitude (in bar-metres) whereas the lower vertical axes represent power (in dB). Fig. 7 results from the array of the present invention. Fig. 8 results from the Nooteboom array and Fig. 9 results from the array of US 4,382,486.

Fig. 10 shows the spectra of all three arrays in a log frequency plot (3-128 Hz). The horizontal axis represents frequency (in Hz) whereas the vertical axis represents power (in dB). The solid line represents the array of the present invention, while the short dashed line represents the array of Nooteboom's method and the long dashed line represents the array of the method of US 4,382,486. From Fig. 10, it may be seen that the array of the present invention provides a flatter composite spectrum.

Figures of merit for each of the simulated arrays in the 0-128 Hz band are summarized below.

| | O-PEAK (bar-meters) | PEAK-TO-PEAK (bar-meters) | PEAK-TO-BUBBLE |
|---|---|---|---|
| Present Invention | 17.3 | 32.9 | 10.1 |
| Nooteboom | 17.5 | 33.2 | 9.0 |
| US 4,382,486 | 17.5 | 33.2 | 9.0 |

EP 0 320 073 B1

Again, once the frequencies of the air guns that make up the array are determined in accordance with the methods of the present invention, it is then possible to determine the appropriate operating parameters for the air guns. Typically, the operating pressure and depth are known so that only air gun volumes may be manipulated to provide the determined frequency. Further, it is possible to employ air gun volumes close to the determined air gun volume, if that exact volume is unavailable, and still be considered part of the present invention. However, it is also possible (and contemplated by the methods of the present invention) to adjust any or all of the air gun operating parameters (volume, pressure, depth, or combinations thereof) to provide these determined frequencies.

Although the preceding discussion has dealt with air guns, clearly the method of the present invention will work with any marine seismic source that employs an explosive or impulsive shock to generate radiated energy. That is, a marine seismic array that is made up of unique elements, with each element of the array having a dominant unique frequency, and with the variation of amplitude with frequency for such an element known (either experimentally or theoretically). Water guns, as an example, may be employed in seismic arrays the size of whose elements are determined by the method of the present invention.

Various modifications of the present invention will become apparent to those skilled in the art from the foregoing description. Such modifications are intended to fall within the scope of the appended claims.

## Claims

1. A method for determining the seismic source frequencies of an array of marine seismic sources which employ an explosive or impulsive shock to generate radiated energy and are towed behind a seismic exploration vessel in conjunction with a streamer provided with seismic detectors wherein the smaller volume seismic sources adequately fill in and smooth the notches of the more powerful, larger volume seismic sources to provide a flatter composite spectrum for the total array, characterized by the steps of:

   - selecting as a starting point in the range of 5-15 Hz the minimum or lowest frequency $F_1$ of a desired array frequency spectrum, corresponding to the maximum or largest seismic source size;
   - selecting the number N of seismic sources in the array;
   - determining the frequencies of the remaining seismic sources from the following set of equations:

$$F_{i+1} = F_i + \Delta_i + \Delta_{i+1}$$
$$\Delta_{i+1} = \Delta_i \, (F_i/F_{i+1})$$

   for i = 1 to N-1, subject to the constraint $2F_1 = F_N + \Delta_N$;
   - solving iteratively the said set of equations from the low end frequency; thus
   - deriving a set of frequencies $F_i$ (i = 1 to N), wherein $F_{i+1} > F_i$, and a set of frequency differences $\Delta_i$ (i = 1 to N);
   - adjusting the value of $\Delta_1$ depending upon the amount of difference between twice the frequency of the largest volume seismic source and $F_N + \Delta_N$, and
   - subsequently repeating the said iterative solving process to calculate a set of frequencies $F_i$ and frequency differences $\Delta_i$ until the first octave is properly fitted (i.e. within a desired preselected limit).

2. The method as claimed in claim 1, characterized in that said seismic sources are air guns.

3. The method as claimed in claim 1, characterized in that said seismic sources are water guns.

4. The method as claimed in any one of claims 1-3, characterized in that the said number of seismic sources is eight.

## Patentansprüche

1. Ein Verfahren zum Bestimmen der seismischen Quellenfrequenzen einer Anordnung von seismischen Quellen im Meeresbereich, die einen explosiven oder impulsmäßigen Schock verwendet, um Energie abzustrahlen, und die hinter einem seismischen Explorationsschwimmkörper in Verbindung mit einem Kabel hinterhergezogen werden, das mit seismischen Detektoren versehen ist, wobei die seismischen Quellen kleineren Volumen die Einkerbungen der leistungsstärkeren, großvolumigeren seismischen Quellen adäquat auffüllen und glätten, um ein flacheres zusammengesetztes Spektrum für die ganze Anordnung zu schaffen, gekennzeichnet durch folgende Schritte:
- das Auswählen der minimalsten oder niedrigsten Frequenz $F_1$ eines gewünschten Frequenzspektrums der Anordnung als ein Startpunkt im Bereich von 5-15 Hz, entsprechend der maximalen oder größten seismischen Quellengröße;
- das Auswählen der Anzahl N von seismischen Quellen in der Anordnung;
- das Bestimmen der Frequenzen der verbleibenden seismischen Quellen aus dem folgenden Satz von Gleichungen:

$$F_{i-1} = F_i + \Delta_i + \Delta_{i+1}$$
$$\Delta_{i+1} = \Delta_i(F_i/F_{i+1})$$

für i = 1 bis N-1, mit der Bedingung $2F_1 = F_N + \Delta_N$;
- das iterative Lösen dieses Satzes von Gleichungen aus der niedrigsten Frequenz heraus; somit
- Ableiten eines Satzes von Frequenzen $F_i$ (i = 1 bis N), wobei $F_{i+1} > F_i$ und eines Satzes von Frequenzdifferenzen $\Delta_i$ (i = 1 bis N);
- das Einstellen des Wertes von $\Delta_1$ in Abhängigkeit des Betrages der Differenz zwischen dem doppelten der Frequenz der seismischen Quelle mit dem größten Volumen und $F_N + \Delta_N$, und
- anschließendes Wiederholen des interativen Lösungsverfahrens zum Berechnen eines Satzes von Frequenzen $F_i$ und Frequenzdifferenzen $\Delta_i$, bis die erste Oktave ganz aufgefüllt bzw. angefittet ist (d.h. innerhalb eines gewünschten vorgewählten Grenzwertes).

**2.** Verfahren nach Anspruch 1, dadurch gekennzeichnet, daß die seismischen Quellen Luftkanonen sind.

**3.** Verfahren nach Anspruch 1, dadurch gekennzeichnet, daß die seismischen Quellen Wasserkanonen sind.

**4.** Verfahren nach einem der Ansprüche 1 bis 3, dadurch gekennzeichnet, daß die Anzahl der seismischen Quellen acht ist.

**Revendications**

**1.** Procédé pour déterminer les fréquences d'une source sismique d'un réseau de sources sismiques marines qui utilisent un choc par explosion ou impulsion pour engendrer une énergie rayonnée et sont tractées derrière un navire d'exploration sismique en étant associées à une flûte munie de détecteurs sismiques, dans lequel les sources sismiques de volume plus petit remplissent et adoucissent de manière adéquate les creux des sources sismiques de volume plus important, plus puissantes, pour fournir un spectre composite plus plat pour le réseau dans son entier, caractérisé en ce qu'il comporte les étapes consistant à :
- choisir un point de départ situé dans la plage de 5 à 15 Hz pour la fréquence $F_1$ minimale ou la plus basse d'un spectre de fréquences de réseau voulu, correspondant à la dimension de la source sismique maximale ou la plus grande,
- choisir le nombre N de sources sismiques dans le réseau,
- déterminer les fréquences des sources sismiques restantes à partir du jeu d'équations suivant :

$$F_{i+1} = F_i + \Delta_i + \Delta_{i+1}$$
$$\Delta_{i+1} = \Delta_i (F_i/F_{i+1})$$

pour i = 1 à N - 1, soumis à la contrainte $2F_1 = F_N + \Delta_N$,
- résoudre de manière itérative ledit jeu d'équations à partir de la fréquence de fin basse, donc,
- dériver un jeu de fréquences $F_i$ (i = 1 à N) dans lequel $F_{i+1} > F_i$ et un jeu de différences de fréquences $\Delta_i$ (i = 1 à N),
- ajuster la valeur de $\Delta_1$ en fonction de la quantité de différence entre deux fois la fréquence de la source sismique de volume le plus grand et $F_N + \Delta_N$, et
- répéter ensuite le traitement de résolution itérative pour calculer un jeu de fréquences $F_i$ et de différences de fréquence $\Delta_i$ jusqu'à ce que la première octave soit correctement remplie (c'est à dire à l'intérieur d'une limite présélectionnée voulue).

**2.** Procédé selon la revendication 1, caractérisé en ce que lesdites sources sismiques sont des canons à air.

**3.** Procédé selon la revendication 1, caractérisé en ce que lesdites sources sismiques sont des canons à eau.

**4.** Procédé selon l'une quelconque des revendications 1 à 3, caractérisé en ce que le nombre de sources sismiques est huit.

FIG.1

FIG.2

FIG.3

FIG.4

FIG.5

FIG.6

FIG.7

FIG.8

FIG.9

FIG.10